# EUROPÄISCHE PATENTSCHRIFT

(11) **EP 2 291 332 B1**
(45) Veröffentlichungstag und Bekanntmachung des Hinweises auf die Patenterteilung: **14.12.2011**
(21) Anmeldenummer: 09749685.5
(22) Anmeldetag: 06.04.2009
(51) Int. Cl.: C02F 3/06, C02F 103/42

(54) **VERFAHREN ZUR BIOLOGISCHEN AUFBEREITUNG VON BADEWASSER**
PROCESS FOR THE BIOLOGICAL PROCESSING OF POOL WATER
PROCÉDÉ DE TRAITEMENT BIOLOGIQUE D'EAU DE BAIGNADE

(30) Priorität: 20.05.2008 AT 8042008
(43) Veröffentlichungstag der Anmeldung: 09.03.2011
(73) Patentinhaber: Weiermayer, Siegfried, 4553 Oberschlierbach (AT); Schardt, Werner, 4571 Steyrling (AT)
(72) Erfinder: Schardt, Christian, A-4643 Pettenbach (AT); Wesner, Wolfgang, A-1050 Wien (AT)
(74) Vertreter: Vinazzer, Edith
(86) Internationale Anmeldenummer: PCT/EP2009/054071
(87) Internationale Veröffentlichungsnummer: WO 2009/141195

(56) Entgegenhaltungen:
- DE-A1- 2 638 514
- DE-U1- 20 012 330
- DE-U1-202004 013 885
- US-A- 5 916 444

## Beschreibung

Die Erfindung betrifft ein Verfahren zur biologischen Aufbereitung von Badewasser aus Schwimmteichen oder Schwimmbecken in einem Wasserkreislauf, in welchem das zu reinigende Wasser zumindest einen biologischen Filter mit einem auf einem Trägersubstrat gewachsenen Biofilm durchströmt.

Die einfachste Variante einer biologischen Wasseraufbereitung ist in Schwimmteichen zu finden, welche einem stehenden Gewässer nachempfunden sind. Die das Wasser reinigende "Biologie" ist in Form von Plankton im Schwimmwasser und sessil auf der Bepflanzung vorhanden. Eine mechanische Reinigung erfolgt in diesem Typ von Schwimmteichen durch Sedimentation, was eine gewisse Tiefe des Teiches voraussetzt, sodass das gebildete Sediment beim Schwimmen nicht aufgewühlt wird. Diese Variante eines Schwimmteiches wird vom Verband Österreichischer Schwimmteichbauer als naturnaher Schwimmteich oder als Schwimmteich der Kategorie 1 bezeichnet. In Schwimmteichen der Kategorie 2 werden periodische Strömungen durch leistungsschwache Pumpen erzeugt, um einen Wasseraustausch zwischen einer Pflanzenzone und einem Schwimmbereich zu erzeugen. In Schwimmteichen der Kategorie 3 wird zusätzlich mittels einer künstlichen Oberflächenströmung die Wasseroberfläche über einen Skimmer mechanisch gereinigt. Die Schwimmteiche dieser drei Kategorien entsprechen limnologisch einem stehenden Gewässer, gelöste organische Stoffe, wie sie durch die Nutzung des Gewässers anfallen, werden vorwiegend von planktonischen Organismen fixiert, umgewandelt und teilweise veratmet. Die Reinigungsleistung ist jahreszeitlich unterschiedlich, je nach Zusammensetzung und Abundanz der Planktonarten.

In Schwimmteichen der Kategorien 4 und 5 übernehmen Biofilme auf angeströmten Oberflächen die Reinigung des Wassers. Bei diesen Schwimmteichen handelt es sich aus limnologischer Sicht um Fließgewässer. Die höhere Reinigungsleistung macht solche Anlagen für den Badegewässerbau besonders interessant. Der aerobe Biofilm kann auf unterschiedlichen Oberflächen gezogen werden. Als Trägersubstrate haben Kiese verschiedenster Körnung derzeit die weiteste Verbreitung. Mit dem stetigen Wasserstrom werden Nährstoffe angeliefert, wodurch eine gegenüber nicht angeströmten Oberflächen bevorzugte Besiedelung des Trägersubstrats erfolgt. Die AT-B-412 275 beschreibt eine weit verbreitete Kombination aus mechanischer und biologischer Reinigung für Schwimmteiche. Aus der AT-A-503 065 sind verschiedene Möglichkeiten der Anordnung von Becken zur Anwendung dieser Technik in Badegewässern aufgezeigt. Die DE 20012330U beschreibt einen Schwimm-und Badeteich mit randseitiges Bepflanzung und einem, einen Sickergrundfilter enthaltenden, Sekundärteich.

Ziel der biologischen Aufbereitung von Badegewässern ist der Abbau der eingebrachten organischen Verunreinigungen bei gleichzeitiger Vermeidung von Algenwachstum. Die Vermeidung von Algenwachstum erfolgt durch Phosphatentzug bis auf eine Konzentration an ortho-Phosphat unter 10 µg/l. Der Phosphatentzug erfolgt bei biologischer Aufbereitung vorwiegend durch eine Umwandlung in Biomasse durch Biofilme, Unterwasserpflanzen und Sumpfpflanzen. Die Veratmung von Kohlenstoffverbindungen erfolgt sobald Biologie - sei es ein Biofilm oder Pflanzen - im System ist, der Abbau von Phosphaten setzt jedoch ein ausgewogenes Verhältnis an Nährstoffen voraus. Dies ist auch der Grund, warum viele Schwimmteiche gegenwärtig in der Lage sind, hygienisch gute Bedingungen sicherzustellen, jedoch durch ein gewisses Algenwachstum die Kundenerwartungen nicht erfüllen.

Um Nährstoffdefizite im Aufbereitungssystem auszugleichen, sind schon verschiedene Maßnahmen vorgeschlagen worden. So ist es beispielsweise aus der AT-B-406 768 bekannt, Schwimmteiche mit Kohlendioxid anzureichern. Kohlendioxid ist ein Nährstoff für Unterwasserpflanzen, deren Wachstum und damit deren Aufnahmekapazität für Phosphate kann, unter der Voraussetzung, dass keine anderen Nährstoffe limitierend wirken, durch diese Maßnahme optimiert werden.

Sauerstoff limitiert das Wachstum von Biofilmen in Filtersystemen, da der gesamte Sauerstoff in Wasser ja in gelöster Form angeliefert werden muss und die Löslichkeit von Sauerstoff in Wasser im Gleichgewicht mit der Atmosphäre bei 20°C lediglich 9 mg/l beträgt. Aus der AT-B-412 340 ist ein Verfahren zur Anreicherung von Sauerstoff im Wasser durch Elektrolyse des Wassers vorgeschlagen, um ein Sauerstoffdefizit zur Versorgung aktiver Biofilme zu verringern.

Aus der EP-B-1 038 435 ist es bekannt, Zeolithe als Aufwuchsmaterial für Biofilme in biologischen Schwimmteichfiltern vorzusehen. Zeolithe besitzen negative Oberflächenladungen, wodurch sie in der Lage sind, Kalium- und Ammonium-Ionen zu speichern. Diese Nährstoffe stehen dem Biofilm durch Ionenaustausch zur Verfügung. Dadurch wird dem Biofilm eine bezüglich der Elemente Kalium und Stickstoff optimierte Nährstoffversorgung geboten.

Die EP-B-1 068 152 offenbart Aufwuchskörper zur Immobilisierung von Mikroorganismen für Abwasseraufbereitungsanlagen. Diese Aufwuchskörper bestehen aus einem schwer abbaubaren Polymer und einem leicht abbaubaren Substrat. Als Varianten für das leicht abbaubare Substrat werden Kohlenstoffverbindungen, beispielsweise Polyhydroxybuttersäure und Biopolymere, ferner Naturstoffe, wie Weizenkleber, Rapskuchen, Zellulose und Stärke, aber auch stickstoffhaltige Substrate oder Substrate, welche mit Stickstoffverbindungen angereichert werden, vorgeschlagen. Bei einer Anwendung in Schwimmteichen wäre zusätzlich auf eine Phosphatarmut des Substrates zu achten.

Im Gegensatz zu den aus der EP-B-1 068 152 bekannten Aufwuchskörpern ist bei Zeolithen eine Regeneration der Ionenbeladung möglich. Nachteilig bei der Verwendung von Zeolith ist jedoch, dass es sich um ein Naturprodukt handelt, wodurch die gewünschten Eigenschaften nur bei ausgewählten Vorkommen zu finden sind und Abweichungen durch ständige Kontrolle ausgeschlossen werden müssen. Eine gute Alternative wären künstliche Zeolithe, welche aber aus Kostengründen bislang nicht eingesetzt werden.

Der Erfindung liegt die Aufgabe zugrunde, ein Verfahren zur biologischen Aufbereitung von Wasser in Schwimmteichen, Schwimmbecken und dergleichen zur Verfügung zu stellen, welches ein gutes Aufnahme- und Abbauvermögen der im Wasser gelösten organischen Substanzen sowie eine Phosphatlimitierung ermöglicht, wobei selbst bei intensiver Nutzung im Badewasser weder Algen noch Biofilme in einem nennenswerten Ausmaß auftreten sollen.

Gelöst wird die gestellte Aufgabe erfindungsgemäß dadurch, dass im bereits abgeleiteten Wasser vor dessen Eintritt in den biologischen Filter eine das Wachstum des Biofilms fördernde Nährstoffzusammensetzung derart zudosiert wird, dass im gefilterten Wasser, welches dem Schwimmteich oder Schwimmbecken zugeführt wird, Phosphor und mindestens ein weiterer Nährstoff für den Aufbau von Biofilm in Mangel gehalten wird.

Bei einer biologischen Aufbereitung nach dem erfindungsgemäßen Verfahren wird durch die Nährstoffzudosierung vor dem Filter die Biofilmaktivität gezielt in den Filterkörper und somit weg vom Schwimmteich bzw. Schwimmbecken und dessen Wänden verschoben. Würde man, um den Biofilmaufbau im Filter zu fördern, entsprechenden Dünger an einer beliebigen Stelle des Gewässers in großem Überschuss zugeben, würde auch das Biofilmwachstum an der Beckenwand gefördert. Gemäß der Erfindung erfolgt die Dosierung und Auswahl der zudosierten Nährstoffe derart, dass im biologischen Filter eine solche Umsetzung in Biomasse erfolgt, dass im gefilterten Wasser neben der Limitierung an Phosphat ein Mangel an mindestens einem weiteren Nährstoff herrscht, wodurch ein Bewuchs der Beckenwand auch vor dem Erreichen einer Phosphatlimitierung verhindert wird.

Die Limitierung des Wachstums der Biofilmbildner im Becken folgt, dem Minimumgesetz von Justus Liebig entsprechend, jeweils ausschließlich durch einen Mangelnährstoff. Jeder zum Aufbau des Biofilms nötige Nährstoff kann diese Funktion übernehmen, so er nicht von außen schneller nachgeliefert wird, als er im Filter verbraucht wird. Speziell geeignet sind die Hauptnährstoffe Stickstoff, Kalium und Magnesium, da diese durch hohen Verbrauch beim Biofilmaufbau schnell in Mangel geraten. Bei entsprechender Führung des Gewässers, in Abhängigkeit vom eingesetzten Trägersubstrat, vom Baumaterial des Beckens bzw. Teiches und vom Füllwasser können jedoch auch Mikronährstoffe wie Eisen, Mangan etc. als limitierende Faktoren genutzt werden. Welcher Stoff und in welcher Konzentration als Mangelnährstoff einzustufen ist, ist im Hinblick auf die unterschiedlich effizienten Möglichkeiten der Aufnahme artspezifisch. Da sich Biofilm aus vielen Arten unterschiedlichster Gattungen zusammensetzt, zeigt bei Biofilm eine Limitierung auf mehrere Elemente gleichzeitig ein optimales Resultat.

Ein optimales Resultat lässt sich daher auf besonders einfache, kostengünstige und zweckmäßige Weise dadurch erreichen, dass dem Wasser ein an sich bekanntes, phosphatfreies Düngemittel zudosiert wird.

Im einfachsten Fall erfolgt die Zudosierung des Düngemittels bzw. der Nährstoffe kontinuierlich und mit einem geringen apparativen Aufwand. Alternativ dazu kann vorgesehen sein, die Dosierung der Nährstoffe programmgesteuert durchzuführen. Der damit einhergehende höhere apparative Aufwand wird durch ein optimales Ergebnis gerechtfertigt. Die programmgesteuerte Zudosierung der Nährstoffe kann in Abhängigkeit von jenen Parametern, welche die Aktivität des Biofilms bestimmen, gesteuert werden. Zu diesen Parametern zählen beispielsweise die Wassertemperatur, das Redoxpotenzial, der Sauerstoffgehalt oder die Leitfähigkeit des Wassers.

Besonders vorteilhaft ist eine Dosierung, die über die Feststellung der Konzentration des in Mangel gehaltenen Nährstoffes im zumindest teilweise gefilterten Wasser gesteuert wird. Insbesondere kann vorgesehen sein, die Konzentration des in Mangel gehaltenen Nährstoffes im Wasser unmittelbar nach dem biologischen Filter oder nach einer definierten Filterstrecke zu ermitteln bzw. zu messen.

Zur Durchführung des erfindungsgemäßen Verfahrens eignen sich biologische Filter mit beliebigen Filtersubstraten, vorzugsweise mit Kies als einfaches und kostengünstiges Filtersubstrat. Der biologische Filter kann zusätzlich bepflanzt sein, es kann jedoch auch ein unbepflanzter biologischer Filter vorgesehen sein, welchem ein Pflanzenfilter nachgeordnet ist.

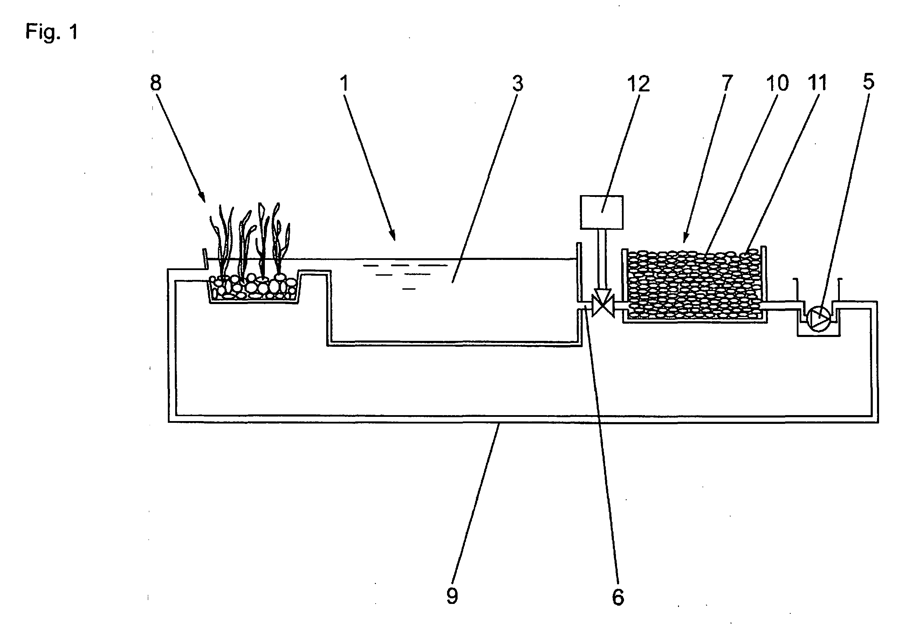

Weitere Merkmale, Vorteile und Einzelheiten der Erfindung werden nun anhand der Zeichnung näher beschrieben. Dabei zeigt
Fig. 1 schematisch eine Ansicht einer nach dem erfindungsgemäßen Verfahren arbeitenden Vorrichtung.

Das erfindungsgemäße Verfahren wird anhand eines Schwimmbeckens 1, welches beispielsweise mit einer Folie ausgekleidet ist, erläutert. Das Verfahren ist auch bei anderen Schwimmbecken, insbesondere Schwimmteichen, anwendbar. Das Wasser 3 des Schwimmbeckens 1 wird einem Filtrationsprozess unterzogen, welcher in einem Wasserkreislauf durchgeführt wird. Die Wasserumwälzung im Wasserkreislauf wird durch eine Pumpe 5 in Gang gehalten. Über einen Ablauf 6, bei einem Schwimmbecken gegebenenfalls auch über eine Überlaufrinne oder über einen Skimmer, wird Wasser 3 aus dem Teich 1 in einen biologischen Filter 7 gesaugt, wobei der Filter 7 horizontal vom Wasser 3 durchströmt wird, wobei alternativ eine vertikale Durchströmung vorgesehen sein kann. Eine Rohr- oder Schlauchleitung 9 transportiert das gefilterte Wasser entweder unmittelbar in das Becken 1 zurück, oder es wird das Wasser vorher durch einen Pflanzenfilter 8 geleitet.

Der biologische Filter 7 besteht aus einem Biofilm 10, welcher auf einem Trägersubstrat 11 aufwächst. Als Trägersubstrat 11 kann eines der üblichen Materialien zum Filteraufbau, vorzugsweise Kies, verwendet werden, in Frage kommen aber auch Sand oder Zeolith oder andere geeignete körnige Substrate, auf denen sich ein aerober Biofilm bildet. In einem Biofilm erfolgt die Aufbereitung von Wasser bekannter Weise im Rahmen von Abbauprozessen, wobei Kohlenstoffverbindungen veratmet werden, Sauerstoff verbraucht wird und Kohlendioxid freigesetzt wird. Durch den Einbau und Umbau von organischem Material im Wasser erfolgt die Fixierung von DOC (Dissolved Organic Carbon), wobei die Energie zum Aufbau des Biofilms ausschließlich aus der Atmung bzw. dem aeroben Abbau von organischer Substanz kommt.

Gemäß der Erfindung werden dem Wasser 3 vor dessen Entströmung in den biologischen Filter 7 gezielt Nährstoffe oder ein Nährstoffgemisch zugesetzt, die bzw. das den Aufbau des Biofilms 10 fördern bzw. fördert. Das Einbringen der Nährstoffe oder des Nährstoffgemisches erfolgt über eine Dosiereinrichtung 12. Auf den Aufbau des Biofilms 10 wirken sich prinzipiell alle einschlägigen Nährstoffe aus, wie Kalium, Stickstoff, Magnesium, Eisen etc.. Es können daher grundsätzlich die bekannten und handelsüblichen, jedoch phosphorfreien Düngemittel, wie sie auch in der Landwirtschaft eingesetzt werden, verwendet werden. Düngemittel, die bei kontinuierlicher Anwendung zu einer Versalzung des Wassers führen, sind nicht geeignet.

Die Erfindung zielt darauf ab, den Biofilmaufbau im Filter 7 zu fördern und einen Biofilmaufbau an der Teichfolienoberfläche bzw. der Schwimmbeckenwand weitgehend zu verhindern. Die gemäß der Erfindung vorgesehene Erhöhung der Nährstoffkonzentration im Wasser 3 vor dessen Eintritt in den biologischen Filter 7 verschiebt die Biofilmaktivität in den Filterkörper und somit weg vom Teich bzw. Schwimmbecken. Dadurch lässt sich ein Verhältnis zwischen dem im Trägersubstrat 11 gebildeten Biofilm 10 zu einem etwaigen Biofilm an der Beckenwand von zumindest 1000 : 1 erzielen. Somit sind eine leichte Pflege des Teiches bzw. Beckens und eine ausgezeichnete optische Qualität des Wassers gewährleistet. Dadurch, dass der Biofilmaufwuchs an der Teich- bzw. Beckenwand extrem reduziert wird, wird auch eine biogene Entkalkung, welche durch Aufnahme von Kohlendioxid aus im Wasser gelöstem Kalziumhydrogenkarbonat im Zuge der Photosynthese von belichtetem Biofilm erfolgt, verhindert. Die biogene Entkalkung ist die Hauptursache für Kalkabscheidungen an den Teich- bzw. Beckenwänden.

Die Dosierung der zugesetzten Nährstoffe hat derart zu erfolgen, dass zumindest einer der zugesetzten Nährstoffe weitgehend oder zur Gänze im Filter 7 oder spätestens im nachgeordneten Pflanzenfilter 8 in Biomasse umgesetzt und dem Wasser entzogen wird. So kann beispielsweise die Nährstoffdosierung derart erfolgen, dass im gefilterten Wasser kein oder kaum Stickstoff und/oder kein oder kaum Kalium und/oder kein oder kaum Magnesium enthalten ist bzw. sind. Durch das Vorhandensein dieser Nährstoffe im Filter wird das Biofilmwachstum angeregt, durch das Fehlen dieser Nährstoffe im gefilterten Wasser wird das Biofilmwachstum im Becken verhindert. Dem Biofilm werden diese Nährstoffe als Anreiz geboten, um die Besiedelung des Filtersubstrates zu fördern, gleichzeitig wird die Besiedelung der Oberflächen im Schwimmbereich minimiert.

Die Bestimmung der Menge und gegebenenfalls der Zusammensetzung der zudosierten Nährstoffe erfolgt in Abhängigkeit von der Wasserbeschaffenheit im Teich bzw. Becken, wobei sich die Auswahl jenes Nährstoffes bzw. jener Nährstoffe, welche, abgesehen von Phosphor, im Wasser limitiert werden soll bzw. sollen, nach der ursprünglichen Wasserqualität, den zu erwartenden Einträgen bzw. Verunreinigungen im Wasser und der Effektivität der Abbaumechanismen für diesen Nährstoff bzw. für diese Nährstoffe im Biofilm 10 und im gegebenenfalls vorgesehenen Pflanzenfilter 8 richtet.

Die Fließgeschwindigkeit des zu reinigenden Wassers im bzw. durch den biologischen Filter 9 und den gegebenenfalls vorgesehenen Pflanzenfilter 8 wird ebenfalls in Abhängigkeit von der Nährstoffumsetzung bzw. vom Abbaumechanismus gewählt und über die vorgesehene Fließstrecke optimiert. Es wird nur jeweils so viel Nährstoff bzw. so viel an Nährstoffen zudosiert, dass ein Verbrauch des oder der gewollten Mangelnährstoffe im Bereich der Filter 7 und 8 gewährleistet ist. Des Weiteren ist die Aktivität des Biofilms 10 und des Pflanzenfilters 8 zu berücksichtigen. Es sind daher auch jene Faktoren, welche die Aktivität des Biofilms 10 beeinflussen, wie Temperatur, Fließgeschwindigkeit, aber auch das jeweilige Entwicklungsstadium der Biofilmpopulation, heranzuziehen, um die Menge und die Nährstoffauswahl zu bestimmen.

Es ist daher von Vorteil, die Dosierung der Nährstoffe mittels entsprechender Dosierprogramme vorzunehmen. Die Dosierprogramme verwenden bzw. stützen sich auf Erfahrungswerte aus einer Vielzahl von Versuchen mit unterschiedlichen Dosierungen, unterschiedlichen Nährstoffzusammensetzungen und der Verwendung definierter Filter. Dosierprogramme gestatten es, definierte Mengen einer Nährstofflösung über eine Dosierpumpe kontinuierlich oder diskontinuierlich dem zu filternden Wasser zuzusetzen. Als Regelparameter können zusätzlich die Temperatur des Wassers, die elektrische Leitfähigkeit des Wassers und der Sauerstoffgehalt bzw. das Redoxpotential des Wassers vor und nach dem biologischen Filter 7 gemessen und berücksichtigt werden, um die Nährstoffdosierung der jeweiligen Aktivität im biologischen Filter 7 anzupassen. Gemäß einer weiteren Variante der Erfindung kann die Nährstoffdosierung auch in Abhängigkeit von Werten einer kontinuierlichen Messung des Gehalts des oder der weiteren, neben Phosphat zu limitierenden Nährstoffe(s) im Wasser unmittelbar nach dem biologischen Filter 7 oder nach einem definierten Abschnitt im biologischen Filter 7 vorgenommen werden. So kann beispielsweise aus der Abnahme des betreffenden Nährstoffes in einer oder mehreren Wegstrecke(n) im biologischen Filter 7 der Bedarf an diesem Nährstoff für den Biofilm 10 errechnet werden und die Zudosierung darauf abgestimmt werden. Damit kann ein Eindringen des in Mangel zu haltenden Nährstoffes in den Schwimmbereich auch bei einer unerwartet geringen Aktivität des Biofilms 10 verhindert werden.

Wie bereits erwähnt kann nahezu jedes beliebige Trägersubstrat 11 zum Biofilmaufbau eingesetzt werden. Die einzige Funktion des Trägermaterials 11 besteht ja darin, eine Aufwuchsfläche für den Biofilm 10 zur Verfügung zu stellen. Es können daher auch sehr kostengünstige Trägersubstrate 11, wie etwa eine Kiesschüttung, verwendet werden.

Neben einer horizontalen Durchströmung des biologischen Filters 7 kann jede andere Art der Durchströmung, beispielsweise auch eine vertikale Durchströmung von unten nach oben oder von oben nach unten, erfolgen.

Wie bereits erwähnt ist die Kombination eines biologischen Filters 7 mit einem nachgeordneten Pflanzenfilter 8 besonders vorteilhaft. Der Pflanzenfilter 8 besteht üblicherweise aus einem bepflanzten Filterbeet, das mit einem Filtersubstrat befüllt ist. Das Wasser durchströmt langsam den bepflanzten Boden und wird dabei auf natürliche Weise gereinigt. An der Oberfläche der Wurzeln, der überstauten Pflanzenteile und des Filtersubstrats bildet sich ebenfalls ein Biofilm, der organische Verunreinigungen und Nährstoffe abbaut. Gleichzeitig nehmen Pflanzen zum Aufbau ihrer Biomasse, angetrieben durch Photosynthese, anorganische Nährstoffe auf und verringern somit weiter die Konzentration der in Mangel zu haltenden Nährstoffe.

### BEZUGSZIFFERNLISTE

- 1: Teich
- 3: Wasser
- 5: Pumpe
- 6: Rohr/Schlauch
- 7: biologischer Filter
- 8: Pflanzenfilter
- 9: Rohr/Schlauch
- 10: Biofilm
- 11: Trägersubstrat
- 12: Dosiereinrichtung

## Patentansprüche

1. Verfahren zur biologischen Aufbereitung von Badewasser aus Schwimmteichen oder Schwimmbecken (1) in einem Wasserkreislauf, in welchem das zu reinigende Wasser zumindest einen biologischen Filter (7, 8) mit einem auf einem Trägersubstrat (11) gewachsenen Biofilm (10) durchströmt,
**dadurch gekennzeichnet,**
**dass** im bereits abgeleiteten Wasser vor dessen Eintritt in den biologischen Filter (7) eine das Wachstum des Biofilms (10) fördernde Nährstoffzusammensetzung derart zudosiert wird, dass im gefilterten Wasser, welches dem Teich bzw. Becken wieder zugeführt wird, Phosphor und mindestens ein weiterer den Aufbau von Biofilm (10) fördernder Nährstoff in Mangel gehalten wird.

2. Verfahren nach Anspruch 1, **dadurch gekennzeichnet, dass** der oder die in Mangel gehaltene(n) Nährstoff(e) ein Nährstoff oder mehrere Nährstoffe aus der Gruppe Stickstoff, Kohlenstoff, Kalium, Magnesium, Eisen und Mangan ist.

3. Verfahren nach Anspruch 1 oder 2, **dadurch gekennzeichnet, dass** dem Wasser ein an sich bekanntes, phosphatfreies Düngemittel zudosiert wird.

4. Verfahren nach einem der Ansprüche 1 bis 3, **dadurch gekennzeichnet, dass** die Dosierung der Nährstoffe kontinuierlich erfolgt.

5. Verfahren nach einem der Ansprüche 1 bis 4, **dadurch gekennzeichnet, dass** die Dosierung der Nährstoffe programmgesteuert erfolgt.

6. Verfahren nach einem der Ansprüche 1 bis 5, **dadurch gekennzeichnet, dass** die Dosierung in Abhängigkeit von Parametern, welche die Aktivität des Biofilms (10) bestimmen, gesteuert wird.

7. Verfahren nach Anspruch 6, **dadurch gekennzeichnet, dass** die Dosierung in Abhängigkeit von der Wassertemperatur, dem Redoxpotential, dem Sauerstoffgehalt oder der Leitfähigkeit des Wassers gesteuert wird.

8. Verfahren nach einem der Ansprüche 1 bis 5, **dadurch gekennzeichnet, dass** die Dosierung über die Konzentration des in Mangel gehaltenen Nährstoffes im zumindest teilweise gefilterten Wasser gesteuert wird.

9. Verfahren nach Anspruch 8, **dadurch gekennzeichnet, dass** die Konzentration des in Mangel gehaltenen Nährstoffes im Wasser unmittelbar nach dem biologischen Filter (7) oder nach einer definierten Filterstrecke gemessen wird.

10. Verfahren nach einem der Ansprüche 1 bis 9, **dadurch gekennzeichnet, dass** der biologische Filter (7) ein beliebiges Filtersubstrat, vorzugsweise Kies, aufweist.

11. Verfahren nach einem der Ansprüche 1 bis 10, **dadurch gekennzeichnet, dass** der biologische Filter (7) bepflanzt oder unbepflanzt ausgeführt ist.

12. Verfahren nach einem der Ansprüche 1 bis 11, **dadurch gekennzeichnet, dass** ein unbepflanzter biologischer Filter (7) und ein diesem nachgeordneter Pflanzenfilter (8) eingesetzt werden.

## Claims

1. A method for the biological processing of pool water from swimming pools or swimming baths (1) in a water circuit, in which the water to be purified passes through at least one biological filter (7, 8) comprising a biofilm (10) grown on a support substrate (11), **characterised in that** a nutrient composition promoting the growth of the biofilm (10) is added to the water which has already been removed before said water enters the biological filter (7), in such a way that the filtered water, which is fed back to the pool or bath, lacks phosphorous and at least one further nutrient promoting the formation of biofilm (10).

2. The method according to claim 1, **characterised in that** the lacking nutrient (s) is/are a nutrient or a plurality of nutrients from the group nitrogen, carbon, potassium, magnesium,, iron and manganese.

3. The method according to either claim 1 or claim 2, **characterised in that** a phosphate-free fertilising agent which is known *per* se is added to the water.

4. The method according to any one of claims 1 to 3, **characterised in that** the nutrients are added continuously.

5. The method according to any one of claims 1 to 4, **characterised in that** the nutrients are added in a program-controlled manner.

6. The method according to any one of claims 1 to 5, **characterised in that** the addition is controlled according to parameters which determine the activity of the biofilm (10).

7. The method according to claim 6, **characterised in that** the addition is controlled according to the water temperature, the redox potential, the oxygen content or the conductivity of the water.

8. The method according to any one of claims 1 to 5, **characterised in that** the addition is controlled via the concentration of the lacking nutrient in the water which has been filtered at least in part.

9. The method according to claim 8, **characterised in that** the concentration of the lacking nutrient in the water is measured directly after the biological filter (7) or after a defined filter length.

10. The method according to any one of claims 1 to 9, **characterised in that** the biological filter (7) comprises any desired filter substrate, preferably gravel.

11. The method according to any one of claims 1 to 10, **characterised in that** the biological filter (7) is planted or unplanted.

12. The method according to any one of claims 1 to 11, **characterised in that** an unplanted biological filter (7) and a downstream plant filter (8) are used.

## Revendications

1. Procédé pour la préparation biologique d'une eau de bain venant de lacs de baignade ou de bassins de baignade (1) dans un circuit d'eau, dans lequel l'eau à nettoyer traverse au moins un filtre biologique (7, 8) avec un biofilm (10) sur un substrat porteur (11),
**caractérisé en ce que**
dans l'eau déjà détournée, avec son entrée dans le filtre biologique (7), une composition de nutriments contribuant au développement du biofilm (10) est ajoutée de manière à ce que dans l'eau filtrée, qui est réacheminée vers le lac ou le bassin, le phosphore et au moins un autre nutriment favorisant le développement supplémentaire du biofilm (10) sont manquants.

2. Procédé selon la revendication 1, **caractérisé en ce que** le ou les nutriment(s) manquant(s) est/sont un nutriment ou plusieurs nutriments du groupe comprenant l'azote, le carbone, le kalium, le magnésium, le fer et le manganèse.

3. Procédé selon la revendication 1 ou 2, **caractérisé en ce que** un engrais sans phosphates connu en soi est ajouté à l'eau.

4. Procédé selon l'une des revendications 1 à 3, **caractérisé en ce que** le dosage des nutriments est effectué en continu.

5. Procédé selon l'une des revendications 1 à 4, **caractérisé en ce que** le dosage des nutriments est commandé par un programme .

6. Procédé selon l'une des revendications 1 à 5, **caractérisé en ce que** le dosage est commandé en fonction de paramètres déterminant l'activité du biofilm (10).

7. Procédé selon la revendication 6, **caractérisé en ce que** le dosage est commandé en fonction de la température de l'eau, du potentiel d'oxydoréduction, de la teneur en oxygène ou de la conductivité de l'eau.

8. Procédé selon l'une des revendications 1 à 5, **caractérisé en ce que** le dosage est commandé par la concentration du nutriment manquant dans l'eau au moins partiellement filtrée.

9. Procédé selon la revendication 8, **caractérisé en ce que** la concentration du nutriment manquant dans l'eau est mesurée en aval du filtre biologique (7) ou du trajet de filtration défini.

10. Procédé selon l'une des revendications 1 à 9, **caractérisé en ce que** le filtre biologique (7) comporte un substrat de filtre au choix, de préférence du gravier.

11. Procédé selon l'une des revendications 1 à 10, **caractérisé en ce que** le filtre biologique (7) est conçu avec ou sans plantes.

12. Procédé selon l'une des revendications 1 à 11, **caractérisé en ce qu'**il est prévu un filtre biologique (7) sans plantes suivi d'un filtre à plantes (8).
